# EUROPÄISCHE PATENTSCHRIFT

(11) **EP 0 527 990 B1**
(45) Veröffentlichungstag und Bekanntmachung des Hinweises auf die Patenterteilung: **13.09.1995**
(21) Anmeldenummer: 92905478.1
(22) Anmeldetag: 24.02.1992
(51) Int. Cl.: H01M 8/24, H01M 8/02, H01M 8/12, H01M 8/06

(54) **VORRICHTUNG ZUR UMWANDLUNG CHEMISCHER ENERGIE EINES BRENNSTOFFES IN ELEKTRISCHE ENERGIE MIT EINER VIELZAHL VON HOCHTEMPERATUR-BRENNSTOFFZELLEN**
DEVICE COMPRISING A PLURALITY OF HIGH-TEMPERATURE FUEL CELLS FOR CONVERTING THE CHEMICAL ENERGY OF A FUEL TO ELECTRICAL ENERGY
DISPOSITIF POUR LA TRANSFORMATION D'ENERGIE CHIMIQUE D'UN COMBUSTIBLE EN ENERGIE ELECTRIQUE AU MOYEN D'UN ENSEMBLE DE CELLULES COMBUSTIBLES A HAUTE TEMPERATURE

(30) Priorität: 05.03.1991 CH 654/91
(43) Veröffentlichungstag der Anmeldung: 24.02.1993
(73) Patentinhaber: KLAUS HERRMANN AKTIENGESELLSCHAFT, 58239 Schwerte (DE)
(72) Erfinder: Bossel, Ulf, Dr., CH-5400 Baden (CH)
(74) Vertreter: Patentanwälte Meinke, Dabringhaus und Partner
(86) Internationale Anmeldenummer: EP9200384
(87) Internationale Veröffentlichungsnummer: WO9216029

(56) Entgegenhaltungen:
- EP-A- 0 357 025
- EP-A- 0 361 383
- EP-A- 0 406 523
- DE-A- 4 004 271
- US-A- 3 400 054
- PATENT ABSTRACTS OF JAPAN vol. 14, no. 32 (E-876)(3975) 22. Januar 1990
- ELECTROCHIMICA ACTA. Bd. 31, Nr. 7, Juli 1986, OXFORD, GB, Seiten 801 - 809; H. TANABE AND ALL: 'CATHODIC POLARIZATION CHARACTERISTICS AT THE OXYGEN ELECTRODES/STABILIZED'

## Beschreibung

Die Erfindung richtet sich auf eine Vorrichtung der im Oberbegriff des Anspruchs 1 angegebenen Gattung.

Brennstoffzellen mit keramischen Feststoffelektrolyten sind seit längerer Zeit in zahlreichen Veröffentlichungen beschrieben worden, wobei hier aus der Vielzahl möglicher Literaturstellen lediglich als Beispiel einige genannt seien:
US-A-4 692 274
US-A-4 618 543
US-A-4 395 468
US-A-3 400 054
US-A-3 429 749
EP-A-0 357 025
EP-A-0 406 523
DE-A-40 04 571
Patent Abstract of Japan, vol. 14, no. 32 (E-876) (3975) V. 22.01.1990 ELECTROCHIMICA ACTA. Band 31, No. 7, Seiten 801 bis 809, Juli 1986

Die bekannten Brennstoffzellenkonstruktionen und Anordnungen genügen den modernen industriellen Anforderungen bezüglich Sicherheit und Betriebsführung, Temperaturkonstanz, Lebensdauer und Einfachheit der Wartung noch nicht. Ziel der vorliegenden Erfindung ist es daher, derartige Vorrichtungen zu vereinfachen und ihre Betriebsführung zu verbessern, insbesondere die konstruktiven und elektrischen Bedingungen zu verbessern und zu gewährleisten bzw. zu vereinfachen. Dabei ist es insbesondere Ziel der vorliegenden Erfindung, eine gleichmäßige Luft- und Brenngaszufuhr zu den elektrochemisch aktiven Flächen sowie eine einwandfreie Stromübertragung von einer Brennstoffzelle auf eine benachbarte Brennstoffzelle unter Vermeidung von Querströmen in den Elektroden zu gewährleisten, wobei die Führung der gasförmigen Medien zu und von den Elektroden so gestaltet werden kann, daß eine möglichst gleichmäßige Betriebstemperatur über die gesamte Elektrodenoberfläche erreichbar ist, bei kostengünstiger Fertigung, kostensparender Wartung und rascher Auswechselbarkeit einzelner Elemente mit hoher Lebensdauer.

Diese Aufgabe wird gemäß der Erfindung durch die kennzeichnenden Merkmale des Anspruches 1 gelöst.

Gegenüber der dem Stand der Technik bekannten Lösung hat die Erfindung die besonderen Vorteile, daß die Zufuhr des gasförmigen Brennstoffes sowie des gasförmigen Sauerstoffträgers zur einzelnen Elektrode praktisch senkrecht zur gesamten Oberfläche gleichzeitig erfolgen kann. Dadurch wird eine gleichmäßige Konzentration dieser gasförmigen Medien, d.h. auch eine gleichmäßige elektrochemische Umsetzung und dadurch eine gleichmäßige Temperatur der Brennstoffzelle über die gesamte Elektrodenoberfläche (quasi-isothermer Betrieb) erzielt.

Durch die Ausbildung der Trennplatte als Hohlkörper mit zusätzlicher Profilierung können die Probleme der Konstanthaltung der Temperatur, der Zufuhr und Abfuhr der gleichen gasförmigen Medien sowie die Wartung und Auswechselung im Falle von Störungen in einfacher Weise optimal gelöst werden.

Durch die sich auf die Trennplatte abstützenden gasdurchlässigen keramischen Zwischenlagen, die senkrecht zur Plattenebene als Hochtemperaturfeder wirken und die Stromkollektoren großflächig und gleichmäßig an die gegenüberliegenden Elektroden zweier benachbarter Brennstoffzellen anpressen, wird eine gleichmäßige mechanische und elektrische Belastung aller Kontaktpunkte an den Elektroden erzielt. Dadurch werden örtliche Überlastungen, Druchbrennen und zusätzliche Stromwärmeverluste vermieden.

Der Größe der Elektrodenfläche sind nicht die üblichen, durch Kontaktprobleme und Schwierigkeiten in der Führung der gasförmigen Medien bedingte enge Grenzen gesetzt. Zwischen zwei großflächigen metallischen Trennplatten können sogar mehrere keramische Elektrolytplatten kleinerer Abmessung nebeneinander angeordnet werden.

Die Anordnung der Plattenebene in senkrechter Lage erleichtert die externe Zufuhr und Abfuhr der gasförmigen Medien, die Zugänglichkeit der einzelnen Bauteile und deren Auswechselbarkeit und reduziert die Bauhöhe von Stapeln, Modulen und ganzen Blöcken.

Die Verlegung der Brennstoffzufuhr mit Hilfe des stielartigen Fortsatzes der Trennplatte vom heißen in den kalten Bereich der Anlage ermöglicht den Einsatz konventioneller elastischer Dichtungen mit zuverlässigen Dichtungseigenschaften.

Die flächige Gasführung im Inneren der Trennplatte ermöglicht nicht nur eine Vorwärmung des Gasstroms, sondern auch die Durchführung endothermer chemischer Konvertierungsreaktionen unmittelbar vor dem Gasaustritt zur Brennstoffelektrode unter Nutzung der im Stapel anfallenden Abwärme, also eine flächige und homogene Kühlung der Brennstoffzelle.

Die Unterbringung von die endothermen Reaktionen beschleunigenden Katalysatoren im Inneren der als Hohlkörper ausgebildeten Trennplatte schafft in situ optimale Bedingungen zur Durchführung derartiger gezielter Reaktionen.

Die externe Zufuhr des Brennstoffs (Symbol CH₄) senkrecht und des Sauerstoffträgers (Symbol O₂) parallel zur Plattenebene schafft ideale Verhältnisse für die gesamte Anlage bezüglich Kanälen, Rohrleitungen, Wärmeaustauschern und anderen Akzessorien. Nur dadurch ist es möglich, industrielle Großanlagen mit erträglichem Aufwand zu bauen und zu warten.

Vorteilhafte Ausgestaltungen der Erfindung ergeben sich aus den Unteransprüchen.

Eine optimale Zuleitung und Verteilung der gasförmigen Medien, wobei hier insbesondere auch der Brennstoff gemeint ist, ergibt sich daraus, daß Kanäle und Öffnungen vorgesehen sind, die in den Trennplatten für eine optimale Gasführung sorgen. Eine besonders vorteilhafte Ausgestaltung der Erfindung besteht darin, daß zur Einbringung gasförmiger Medien im kalten Bereich der Vorrichtung die Trennplatten mit einem nach außen überkragenden Fortsatz versehen sind. Daraus ergibt sich, daß beispielsweise dort vergleichsweise niedrige Temperaturen herrschen von beispielsweise weniger als 300° C, so daß alle vorzusehenden Dichtungen herkömmlicher Art sein können, d.h. sie müssen nicht hochtemperaturfest sein, sie können z.B. aus einem temperaturbeständigen Kunststoff, wie Polytetrafluoräthylen, bestehen.

Die Ausgestaltung der Stromkollektoren in der in den Unteransprüchen bezeichneten Art ergibt eine Fülle konstruktiver Vorteile, wie sie bereits weiter oben grundsätzlich angesprochen wurden.

Weitere Einzelheiten, Merkmale und Vorteile der Erfindung ergeben sich aufgrund der nachfolgenden Beschreibung sowie anhand der Zeichnung. Diese zeigt in:
- Fig. 1: einen schematischen Aufriß/Schnitt des prinzipiellen Aufbaus der Brennstoffzellenanordnung,
- Fig. 2: einen schematischen Grundriß/Schnitt des prinzipiellen Aufbaus der Brennstoffzellenanordnung,
- Fig. 3: eine perspektivische Darstellung des prinzipiellen Aufbaus der als Hohlkörper ausgebildeten Trennplatte,
- Fig. 4: einen schematischen Aufriß/Schnitt der als Hohlkörper ausgebildeten Trennplatte,
- Fig. 5: einen schematischen Grundriß/Schnitt der als Hohlkörper ausgebildeten Trennplatte,
- Fig. 6: eine perspektivische Darstellung des prinzipiellen Aufbaus der auseinander gezogen gezeichneten Brennstoffzelle mit den einzelnen Bauelementen,
- Fig. 7: einen schematischen Schnitt durch einen Stapel bestehend aus mehreren Brennstoffzellen und verbindenden Bauelementen,
- Fig. 8: eine perspektivische Darstellung eines aus zwei in Serie geschalteten Stapeln von Brennstoffzellen bestehenden Moduls,
- Fig. 9: einen schematischen Grundriß/Schnitt durch einen aus zwei in Serie geschalteten Stapeln von Brennstoffzellen bestehenden Modul,
- Fig. 10: eine perspektivische Darstellung eines aus vier Modulen bestehenden Blocks von Brennstoffzellen,
- Fig. 11: einen schematischen Schnitt durch zwei benachbarte Brennstoffzellen mit dazwischenliegender, mehrere Kanäle aufweisender Trennplatte,
- Fig. 12: einen schematischen Schnitt durch drei Varianten der Berührungskontur zwischen Trennplatte und gasdurchlässiger Zwischenlage,
- Fig. 13: einen schematischen Aufriß von zwei Varianten der Trennplatte mit unterschiedlicher Führung der gasförmigen Medien.

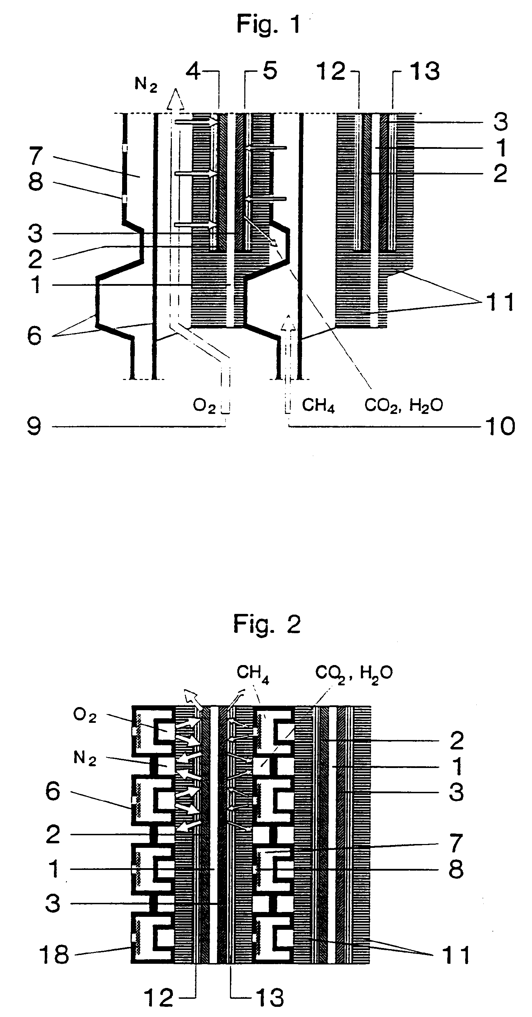

In Fig. 1 ist ein schematischer Aufriß/Schnitt des prinzipiellen Aufbaus einer Vorrichtung nach der Erfindung dargestellt. Ein keramischer Feststoffelektrolyt 1 aus einem Sauerstoffionen leitenden, dotierten und stabilisierten Metalloxid, beispielsweise aus mit Y₂O₃ stabilisierten ZrO₂ weist auf einer Seite eine poröse (positive) Sauerstoffelektrode 2 aus einem mit SrO dotierten La/Mn-Perowskit und auf der anderen Seite eine poröse (negative) Brennstoffelektrode 3 aus Ni/ZrO₂-Cermet auf. Auf der Sauerstoffelektrode 2 befindet sich eine dünne Cr-Oberflächenschicht 4 und auf der Brennstoffelektrode 3 eine dünne Ni-Oberflächenschicht 5.

Eine als Hohlkörper ausgebildete gasdichte Trennplatte 6, die der Separierung des Gasraumes vor der Sauerstoffelektrode 2 von demjenigen der gegenüberliegenden Brennstoffelektrode 3 der benachbarten Brennstoffzelle dient, ist in Fig. 1 etwa in der Mitte und links außen dargestellt. Die Trennplatte 6 weist Kanäle 7 mit Öffnungen 8 auf.

Die Zufuhr des gasförmigen Sauerstoffträgers (Symbol O₂) zur Brennstoffzelle, wobei es sich beispielsweise um reinen Sauerstoff oder auch Luft handeln kann, trägt das Bezugszeichen 9, während die Zufuhr des gasförmigen Brennstoffes (Symbol CH₄, allgemein für Methan, Kohlenwasserstoffe, H₂ oder CO) mit 10 bezeichnet ist.

Eine als Hochtemperaturfeder wirkende keramische, gasdurchlässige Zwischenlage 11 in Form eines Filzes oder Vlieses umschließt einen Stromkollektor 12 auf der Sauerstoffseite und einen Stromkollektor 13 auf der Brennstoffseite, wobei die Stromkollektoren 12 und 13 durch diese hochelastischen Zwischenlagen 11 gleichmäßig an die Elektroden 2 und 3 gedrückt werden. Die Zwischenlagen 11 stützen sich jeweils auf den genannten Trennplatten 6 ganzflächig ab. Dadurch wird ein über die gesamte Elektrodenfläche gleichbleibender Kontaktdruck des Stromkollektors und eine gleichmäßige Stromverteilung erreicht.

Die Strömung der gasförmigen Medien O₂, CH₄, N₂, CO₂, H₂O, ist durch Pfeile angedeutet, wobei N₂ allgemein für Ballastgas (meistens Stickstoff oder Restsauerstoff) auf der Sauerstoffseite und CO₂ bzw. H₂ für Reaktionsprodukte (meistens Kohlendioxid, Wasserdampf oder Restbrennstoff), d.h. Abgas auf der Brennstoffseite als Symbol in den Figuren angegeben ist.

Wie sich aus Fig. 2 ergibt, befindet sich im Hohlraum der Trennplatte 6 in den Kanälen 7 auf der Brennstoffseite ein Katalysator 18, der ggf. die endotherme Konvertierungsreaktion des Primärbrennstoffs (CH₄) mit dem Reaktionsprodukt (CO₂ oder H₂O) oder mit von außen zugeführten Gasen gleicher oder ähnlicher Zusammensetzung zu Sekundärbrennstoff (CO und H₂) beschleunigt.

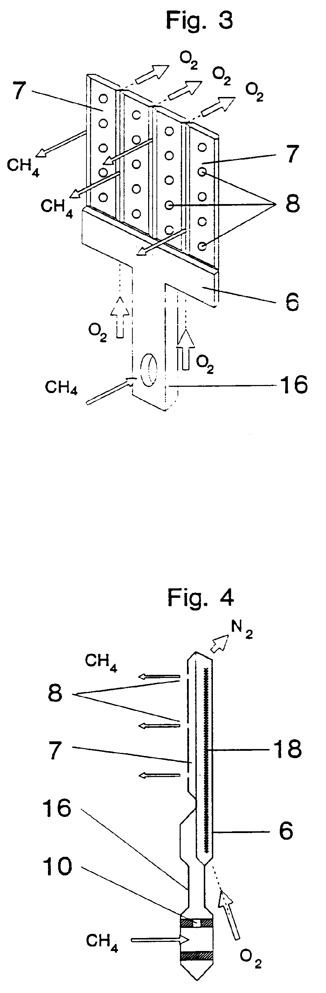

Wie sich aus Fig. 3 ergibt, weist die Trennplatte 6 einen stielartig vorkragenden Fortsatz 16 auf, der der Zuführung des Brennstoffes (CH₄) dient.

Die Pfeile in den Figuren deuten die Strömungsrichtung in den gasförmigen Medien an. Dabei bedeuten die feinpunktierten Linien schematisch die Stromlinien des Brennstoffs (CH₄) innerhalb der hohlen Trennplatte 6 und die gestrichelten die Stromlinien des Sauerstoffträgers (O₂) hinter der Trennplatte. Die Austrittsrichtungen von CH₄ und O₂ sind entgegengesetzt und stehen senkrecht auf der Plattenebene, sie weisen jeweils auf die benachbarte, in den Fig. 3 und 4 nicht dargestellte Elektrode hin.

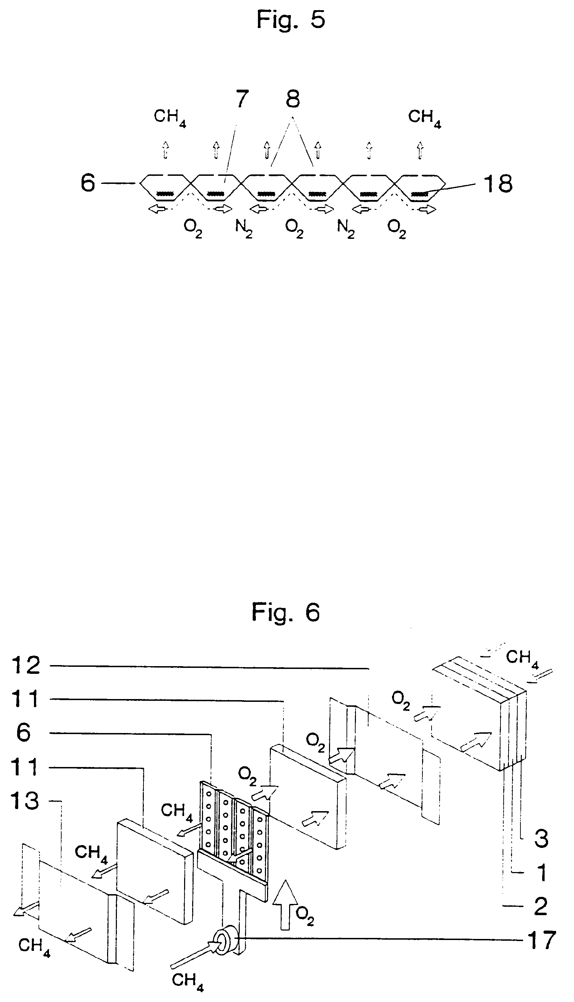

Wie sich aus Fig. 4 ergibt, weist die Brennstoffzelle eine innere Zufuhr für den Brennstoff auf, die im dargestellten Beispiel durch eine Öffnung 10 im Inneren des stielartig vorkragenden Fortsatzes 16 der Trennplatte 6 erfolgt. Der Brennstoff (CH₄) wird im Inneren der Brennplatte 6 geführt, während der Sauerstoffträger O₂ außen an der profilierten Trennplatte 6 entlangstreicht, wobei N₂ den Abzug des Ballastgases am Rande der Trennplatte andeutet, wobei sich aus Fig. 5 in der dort wiedergegebenen vereinfachten Aufsicht wiederum die Strömungsverhältnisse ergeben.

Fig. 6 zeigt in einer sogenannten Explosionsdarstellung die Anordnung der einzelnen Bauelemente. Wie sich aus dieser Darstellung ergibt, wird der Stromkollektor 13 senkrecht zur Plattenebene vom Brennstoffstrom (CH₄) durchsetzt. Das folgende Zwischenlager 11 aus filz- oder vliesartigen Platten, welches, wie beschrieben, als Hochtemperaturfeder senkrecht zur Plattenebene wirkt, wird ebenfalls senkrecht zur Plattenebene vom Brennstoffstrom (CH₄) durchflutet. Wie erkennbar, befindet sich der stielartig vorkragende Zuleitungsfortsatz 16 zur Zuleitung des Brennstoffes (4) ausserhalb des Bereiches hoher Temperatur, so daß das dort mit 17 bezeichnete Dichtungselement in die gasförmigen Medien nicht hochtemperaturbeständig sein muß.

Die sauerstoffseitige Zwischenlage 11 hat die gleiche Funktion wie die brennstoffseitig oben schon angegebene keramische Zwischenlage, wobei der O₂-Strom im Stromkollektor 12 auf der Sauerstoffseite senkrecht zur Plattenebene durchströmt und senkrecht auf die poröse (positive) Sauerstoffelektrode 2 der eigentlichen Brennstoffzelle auftritt. In Fig. 1 und 2 ist auch jeder keramische Feststoffelektrolyt mit 1 und die Brennstoffelektroden mit 3 bezeichnet. Wie sich aus der Darstellung gemäß Fig. 6 ergibt, erfolgt die externe Zuleitung des Brennstoffes (CH₄) im wesentlichen senkrecht und diejenige des Sauerstoffes (O₂) im wesentlichen parallel zur Plattenebene der Brennstoffzelle 1,2,3 bzw. der gesamten stapelartigen Anordnung von Brennstoffzellen.

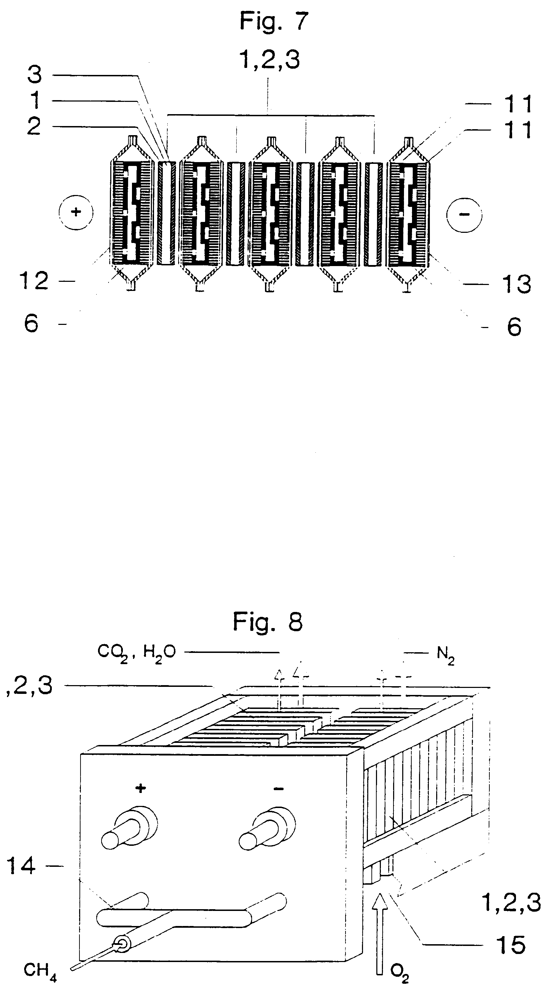

Ein solcher Stapel von Brennstoffzellen ist in Fig. 7 vereinfacht im Schnitt und in Fig. 8 ff. dargestellt, wobei es für Fig. 7 gleichgültig ist, ob es sich um einen Grundriß oder Aufriß handelt. Erkennbar werden die mit 1,2,3 bezeichneten Brennstoffzellen von mit 6 bezeichneten Trennplatten mit Kanalstruktur voneinander getrennt, wobei in Fig. 7 der Stromkollektor 12 auf der Sauerstoffseite an den Stirnseiten mit dem Stromkollektor 13 auf der Brennstoffseite der benachbarten Brennstoffzelle elektrisch leitend verbunden ist. Mit + und - sind die Polaritäten der Klemmen (nicht näher dargestellt) bezeichnet. Die in Fig. 8 perspektivisch angedeutete Vorrichtung besteht, wie beschrieben, aus Brennstoffzellen 1,2,3, insbesondere gemäß Anordnung nach Fig. 7, wobei aus Darstellungsgründen die zwischen den Brennstoffzellen liegenden Bauelemente, wie die Stromkollektoren, Zwischenlagen und Trennplatten, dort nicht einzeln wiedergegeben sind. Ein externer Zuleitungskanal 14 für den Brennstoff (CH₄), der senkrecht zur Plattenebene steht, ist dort andeutungsweise wiedergegeben, während der externe Zuleitungskanal für den Sauerstoffträger (O₂), parallel zur Plattenebene nur mit einem Pfeil 15 angedeutet ist. Die Strömungsrichtung für die Gase und Polaritäten der Klemmen sind gemäß obiger Beschreibung auch dort angegeben.

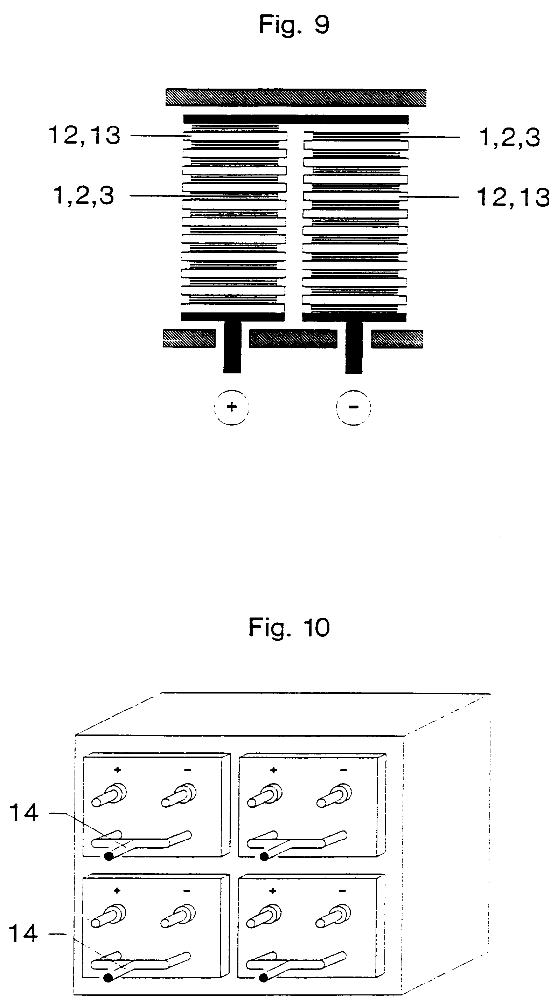

Aus den Fig. 9 und 10 ist erkennbar, daß die Brennstoffzellen als Module ausgestaltet sind, die in Serie oder Reihe geschaltet werden können, wobei in Fig. 9 ein aus zwei Serien geschalteter Stapel von Brennstoffzellen wiedergegeben ist. Fig. 10 zeigt die perspektivische vereinfachte Darstellung eines aus vier Modulen bestehenden Blocks von Brennstoffzellen, wobei die Erfindung selbstverständlich nicht auf die hier dargestellten Modulanzahlen beschränkt ist.

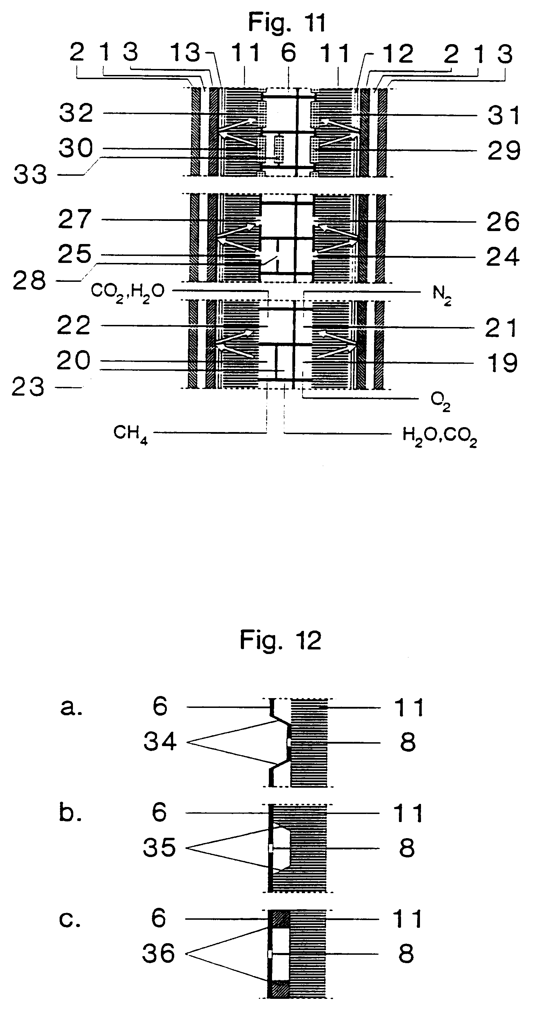

Fig. 11 zeigt einen schematischen Schnitt durch zwei benachbarte Brennstoffzellen mit dazwischenliegender, mehrere Kanäle aufweisender Trennplatte. Zwischen zwei mit 1,2,3 bezeichneten benachbarten Brennstoffzellen befinden sich die Stromkollektoren 12 und 13 und die gasdurchlässigen Zwischenlagen 11 (hochelastische Zwischenglieder) sowie die Trennplatte 6. Letztere, als Hohlkörper ausgeführt, weist im vorliegenden Fall mehrere, der Führung der gasförmigen Medien dienende Kanäle und Öffnungen auf. 19 ist der Kanal für die Zufuhr des Sauerstoffträgers (O₂), 20 derjenige für die Zufuhr des Brennstoffs (CH₄). 21 stellt den Kanal für die Abfuhr des Restsauerstoffs und des Ballastgases (N₂) auf der Sauerstoffseite, 22 denjenigen für die Abfuhr der Reaktionsprodukte (CO₂, H₂O) auf der Brennstoffseite dar. 23 ist ein spezieller Kanal für die Zufuhr von Reaktionsgasen (H₂O, CO₂), die der Brennstoffzellenanordnung zusätzlich zur Durchführung gezielter chemischer Konvertierungsreaktionen von außen her zugeleitet werden. 24 stellt eine Öffnung für die Zufuhr des Sauerstoffträgers (O₂) zur Brennstoffzelle 1,2,3 dar. 25 ist eine Öffnung für die Zufuhr des Brennstoffs (CH₄) zur Brennstoffzelle 1,2,3. 26 steht für eine Öffnung für die Abfuhr des Restsauerstoffs und des Ballastgases (N₂) und 27 für eine Öffnung für die Abfuhr der Reaktionsprodukte (CO₂, H₂O) von der Brennstoffzelle 1,2,3. 28 stellt eine Öffnung zwischen benachbarten Kanälen zur gezielten Mischung von gasförmigen Medien, z.B. zur Einleitung der Konvertierungsreaktionen, dar. 29 ist ein offenporiges Bauelement für die Zufuhr des Sauerstoffträgers (O₂) zur Brennstoffzelle, das im wesentlichen die gleiche Funktion wie die Öffnung 24 hat. Ein entsprechendes offenporiges Bauelement 30 dient der Zufuhr des Brennstoffs (CH₄) und hat die gleiche Funktion wie die Öffnung 25. 31 ist ein offenporiges Bauelement für die Abfuhr des Restsauerstoffs und des Ballastgases (N₂), das die gleiche Funktion wie die Öffnung 26 hat. 32 ist ein offenporiges Bauelement, das der Abfuhr der Reaktionsprodukte (CO₂, H₂O) dient und die gleiche Funktion wie die Öffnung 27 hat. Das offenporige Bauelement 33 zwischen benachbarten Kanälen hat die gleiche Funktion wie die Öffnung 28. Öffnungen und offenporige Bauelemente in der Trennplatte 6 können selbstverständlich auch in beliebig anderer, von Fig. 11 abweichender Kombination vorhanden sein.

In Fig. 12 ist ein schematischer Schnitt durch drei Varianten der Berührungskontur zwischen Trennplatte und gasdurchlässiger Zwischenlage dargestellt. 6 ist die als Hohlkörper ausgebildete gasdichte Trennplatte, 8 eine Öffnung in der Trennplatte und 11 die als Hochtemperaturfeder senkrecht zur Plattenebene wirkende keramische, gasdurchlässige Zwischenlage in Form eines Vlieses oder Filzes. Gemäß Variante a weist die Trennplatte 6 eine profilierte Außenfläche 34 auf, während die Zwischenlage 11 durch eine Ebene begrenzt ist. In der Variante b ist es gerade umgekehrt: Die Zwischenlage 11 hat eine profilierte Außenfläche 35, während die Kontur der Trennplatte 6 eben ist. Gemäß Variante c ist die Außenfläche sowohl der Trennplatte 6 als auch der Zwischenlage 11 durch eine Ebene begrenzt. Zwischen Trennplatte 6 und Zwischenlage 11 befindet sich im vorliegenden Fall ein profiliertes Strömungsführungselement 36.

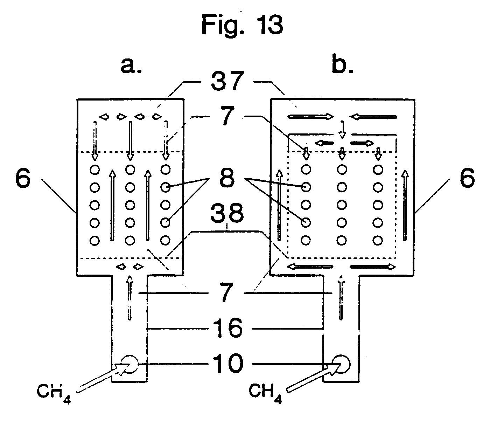

Fig. 13 zeigt einen schematischen Aufriß von zwei Varianten der Trennplatte mit unterschiedlicher Führung der gasförmigen Medien. In beiden Fällen weist die Trennplatte 6 Kanäle 7 auf und ist mit einem stielartigen vorkragenden Fortsatz 16 versehen, an dessen äußerem Ende die interne Zufuhr 10 des Brennstoffs (CH₄) erfolgt. 8 sind Öffnungen in der Trennplatte 6. Die Strömungsrichtungen des Brennstoffs (CH₄) sind durch Pfeile, die Stromlinien durch fein punktierte Linien angedeutet. 37 stellt einen in den Bereich der Nachverbrennung hineinreichenden, als Wärmetauscher ausgebildeten Teil der Trennplatte 6 dar. 38 ist die Projektion der eigentlichen aktiven Brennstoffzellen-Platte auf die Plattenebene. Im Falle der Variante a ist der Teil 37 als lappenartiger Fortsatz ausgebildet und seine Beaufschlagung mit Brennstoff (CH₄) erfolgt über das Innere der Trennplatte 6, während gemäß Variante b der Teil 37 als Fortsetzung eines die Trennplatte 6 umschließenden Hohlrahmens aufgefaßt werden kann, der sich in der die Trennplatte 6 umgebenden Nachbrennzone befindet und deshalb stark erhitzt wird, wobei die bei hoher Temperatur zugeführte Wärme zur Durchführung der endothermen Konvertierungsreaktionen des Brennstoffs (CH₄) genutzt wird.

Es wurde ein Stapel aus 20 Brennstoffzellen und entsprechenden zusätzlichen, für die elektrische Stromleitung und den mechanischen Zusammenhalt erforderlichen Bauelementen hergestellt. Die eigentliche Brennstoffzelle bestand aus einem keramischen, plattenförmigen, rechteckigen, ebenen Feststoffelektrolyt 1 aus stabilisiertem, dotiertem ZrO₂ von 100 mm Breite, 110 mm Länge und 0,25 mm Dicke. Der Feststoffelektrolyt wurde auf einer Seite auf einer quadratischen Fläche von 100 mm Seitenlänge mit einer porösen Sauerstoffelektrode 2 aus Sr-La/Mn-Perowskit und einer Dicke von 0,09 mm beschichtet. Die Brennstoffelektrode 3 von gleicher Fläche und 0,05 mm Dicke bestand aus Ni/ZrO₂-Cermet und wurde in gleicher Weise auf der anderen Seite des Feststoffelektrolyten 1 aufgebracht. Dementsprechend blieb vom Feststoffelektrolyt 1 ein 10 mm breiter Streifen an der Schmalseite beidseitig unbeschichtet. Auf der Sauerstoffelektrode 2 wurde eine 10 mm dicke Cr-Oberflächenschicht 4, auf der Brennstoffelektrode 3 eine ebenso dicke Ni-Oberflächenschicht 5 aufgedampft.

Die als Hohlkörper gestaltete gasdichte Trennplatte 6 wurde aus zwei halbschaligen Blechkörpern von 0,1 mm Dicke, bestehend aus einer zunderbeständigen Fe/Cr/Al-Legierung gemäß Deutscher Norm DIN mit der Bezeichnung CrA120 5 und der Werkstoffnummer 1.4767 hergestellt. Die Legierung hatte folgende Zusammensetzung:
Cr = 20 Gewichts-%
Al = 5 Gewichts-%
Si = 0,8 Gewichts-%
Mn = 0,7 Gewichts-%
C = 0,08 Gewichts-%
Fe = Rest

Die beiden Halbschalen wurden am Rand am ganzen Umfang gasdicht verschweißt und im mittleren Bereich mit einigen Schweißpunkten zu einer Kanäle 7 aufweisenden Hohlstruktur verbunden. Auf der Brennstoffseite wurden im Bereich der eigentlichen Brennstoffzelle 1,2,3 je 4 Reihen von jeweils 5 Löchern von 0,5 mm Durchmesser angebracht, durch die der Brennstoff (CH₄) senkrecht zur Plattenebene austreten konnte. Die Trennplatte 6 war mit einem 100 mm langen stielartig vorkragenden Fortsatz 16 versehen, durch den die interne Zufuhr 10 des Brennstoffs (CH₄) erfolgte. Die Zufuhr 10 des Brennstoffs (CH₄) geschah konkret über ein ringförmiges mit radialen Öffnungen versehenes Keramikteil, das sich am Zuleitungsende des Fortsatzes 16 zwischen den Halbschalen befand. Die Trennplatte 6 wurde auf beiden Seiten im rechteckigen Bereich mit je einer keramischen, gasdurchlässigen Zwischenlage 11 aus einem 1 mm dicken ZrO₂-Vlies belegt, die als Hochtemperaturfeder wirkte. Auf die Zwischenlage 11 wurde auf der Sauerstoffseite der Stromkollektor 12 in Form eines feinmaschigen Metallgewebes aus einer warmfesten Ni/Cr-Legierung mit der Handelsbezeichnung Inconel 690 (INCO) von folgender Zusammensetzung gelegt:
Cr = 30 Gewichts-%
Fe = 9, 5 Gewichts-%
C = 0,03 Gewichts-%
Ni = Rest

Auf der Brennstoffseite wurde der Stromkollektor 13 in Form eines ebenfalls feinmaschigen Gewebes aus Nickel auf die Zwischenlage 11 aufgelegt und an den überstehenden Rändern der Breitseite mit dem Stromkollektor 12 der Sauerstoffseite verschweißt. Auf diese Weise wurde der Stromübergang von einer Seite der Trennplatte 6 auf die andere Seite unabhängig von gewissen Betriebsparametern gewährleistet.

Es wurden insgesamt 21 plattenförmige, aus je einer hohlen Trennplatte 6, zwei keramischen, gasdurchlässigen Zwischenlagen 11, einem Stromkollektor 12 auf der Sauerstoffseite und einem Stromkollektor 13 auf der Brennstoffseite bestehende Körper gefertigt. Desgleichen wurden total 20 aus Feststoffelektrolyt 1, Sauerstoffelektrode 2 und Brennstoffelektrode 3 bestehende, keramische Platten hergestellt. Nun wurden abwechslungsweise die Trennplattenkörper mit den Brennstoffzellen-Platten hintereinander angeordnet und zusammengebaut. Der ganze Stapel wurde unter Ausübung einer senkrecht zur Plattenebene wirkenden Kraft von 200 N zusammengedrückt und durch einen äußeren metallischen Rahmen in dieser vorgespannten Lage gehalten. Die mittlere Flächenpressung im Stapel betrug somit ca. 20 kPa.

Der Brennstoff (CH₄) wurde über einen externen Zuleitungskanal 14 dem unteren Ende des Fortsatzes 16 der Trennplatte 6, das mit einer Öffnung vesehen war, zugeführt. Der Zuleitungskanal 14 hatte die Form eines durchgehenden, mit seitlichen Schlitzen versehenen Rohres, das am Zuführungsende mit einem Sechskantteil und am anderen Ende mit einem Gewinde mit Hutmutter versehen war. An beiden Enden dieses Rohres sowie zwischen je zwei benachbarten Trennplatten 6 waren zur Abdichtung der Zufuhr des Brennstoffs (CH₄) Dichtungselemente 17 aus Polytetrafluoräthylen angebracht. An beiden Enden des den Stapel zusammenhaltenden metallischen Rahmens waren elektrisch isolierende Keramikplatten aus Al₂O₃ angeordnet. Am jeweils letzten Stromkollektor 12 bzw. 13 war je eine elektrische + bzw. - Klemme angeschweißt.

Der Brennstoffzellen-Stapel wurde in eine Vorrichtung eingebaut, in die von unten vorgewärmte Luft als Sauerstoffträger unter geringem Überdruck eingeführt wurde. Nach Einschalten des Luftgebläses und der Brennstoffzufuhr 14 wurden die getrennt durch die Brennstoffzelle geführten Gase in der der Brennstoffzelle nachgeschalteten Nachbrennzone elektrisch gezündet. Die durch Verbrennung erzeugte Wärme wurde dann über einen in das Gerät integrierten Wärmeaustauscher an die Frischluft übertragen. Über einen externen Zuleitungskanal 15 gelangte die so vorgewärmte Luft über die interne Zufuhr 9 in die durch die Außenfläche der profilierten Trennplatte 6 gebildeten Kanäle für den Sauerstoffträger in den Bereich der Brennstoffzellen. Diese wurden also durch das Entlangstreichen der Luft auf der Sauerstoffseite nach oben aufgeheizt.

Nach Erreichen einer Temperatur von ca. 650° C setzte die elektrochemische Umwandlung des Brennstoffs (CH₄) im vorliegenden Fall H₂ ein. Dieser Brennstoff strömte bei dieser Temperatur immer noch größtenteils ungenutzt durch die Brennstoffzelle, obgleich bei sehr niedriger Stromdichte bereits eine elektrische Spannung festgestellt werden konnte. Der aus dem Stapel ausströmende Brennstoff wurde in der Nachverbrennungszone, die sich direkt hinter der Brennstoffzelle befand, weiterhin mit der heißen Luft zur Reaktion gebracht und verbrannt, wobei die freiwerdende Wärme im Wärmeaustauscher zur weiteren Erhitzung der zugeführten Luft herangezogen wurde. Dadurch erreichten die Brennstoffzellen in kurzer Zeit (ca. 30 Minuten) eine Temperatur von 850° C, bei der die elektrochemische Umwandlung des Brennstoffs mit dem Sauerstoff der Luft voll einsetzte.

Die Brennstoffzellenanordnung wurde über eingebaute Thermostate auf einer Betriebstemperatur von 850° C eingestellt. Bei Erreichen dieser Temperatur wurde der Brennstoffstrom über einen Regler derart beeinflußt, daß eine elektrochemische Umsetzung von 50 % erzielt wurde. Über einen anderen Regler wurde der Sauerstoffträger (Luft) so eingestellt, daß eine konstante Betriebstemperatur von 850° C gehalten wurde. Bei einer Nennstromdichte von 0,2 A/cm² einseitiger, aktiver Elektrodenoberfläche wurde ein fester Normstrom von 20 A gefahren. Die Zellenspannung betrug durchschnittlich 0,73 V, die gesamte Spannung des Stapels (20 Zellen) 14,6 V und die Leistung 282 W. Die mittlere Umsetzungsintensität pro Brennstoffzellenfläche (Leistungsdichte) betrug demnach 0,146 W/cm².

## Patentansprüche

1. Vorrichtung zur Umwandlung chemischer Energie eines Brennstoffes in elektrische Energie mit einer Vielzahl parallel aneinander geschichteter Hochtemperaturbrennstoffzellen mit einem Feststoffelektrolyten (1), einer Sauerstoffelektrode (2), einer Brennstoffelektrode (3), einer Trennplatte (6) zwischen benachbarten Brennstoffzellen, mit Stromkollektoren (12,13) zwischen einer Trennplatte (6) und der jeweils gegenüberliegend benachbarten Elektrode zur elektrisch leitenden Verbindung benachbarter Brennstoffzellen sowie mit Organen für die Zufuhr und Abfuhr der gasförmigen Medien,
dadurch gekennzeichnet,
- daß die Sauerstoffelektrode (2) aus mit SrO-dotierten Mn-Oxiden mit einer Cr-Oberflächenschicht (4) und
- die Brennstoffelektrode (3) aus Ni/ZrO₂-Cermet mit einer Ni-Oberflächenschicht (5) besteht, daß
- die Trennplatte (6) als Hohlkörper zur Führung und Verteilung sowie Sammlung gasförmiger Medien ausgebildet ist, und daß
- zwischen Trennplatte (6) und den Stromkollektoren (12,13) ein hochelastisches, als Hochtemperaturfeder wirkendes, Bauelement in Form einer gasdurchlässigen Zwischenlage (11) vorgesehen ist.

2. Vorrichtung nach Anspruch 1,
dadurch gekennzeichnet,
daß die Ebenen der plattenförmigen Brennstoffzellen (1,2,3) vertikal angeordnet sind, wobei jede Trennplatte (6) zur Führung und Verteilung und Sammlung der gasförmigen Medien mit Kanälen (7) und Öffnungen (8) versehen ist und/oder daß im Brennstoffzellenstapel mindestens ein auf der Plattenebene senkrecht stehender, externer Zuleitkanal (14) für den Brennstoff (Symbol CH₄) und mindestens ein parallel zur Plattenebene stehender, externer Zuleitkanal (15) für den Sauerstoffträger (Symbol O₂) vorgesehen ist.

3. Vorrichtung nach Anspruch 1 oder 2,
dadurch gekennzeichnet,
daß zur Zuführung der gasförmigen Medien im kalten Bereich der Vorrichtung die Trennplatte (6) mit einem über die Kontur der Brennstoffzellenelemente (1,2,3) überkragenden Fortsatz (16) versehen ist.

4. Vorrichtung nach einem der vorangehenden Ansprüche,
dadurch gekennzeichnet,
daß zur strömungsmechanisch optimalen Zufuhr des Brennstoffes (CH₄) und des Sauerstoffträgers (O₂) und zur Abfuhr der Restbrennstoffe der Reaktionsprodukte und/oder des Restsauerstoffes sowie der Ballaststoffe mit quasi isothermen Betrieb der Brennstoffzelle (1,2,3) über ihre gesamte Plattenebene die Trennplatte (6) profiliert ausgebildet ist und/oder mit je einer Gruppe von Kanälen (19 bis 23), wobei Kanäle (19 bis 23) mit entsprechenden, auf die Brennstoffzellenelemente (1 bis 3) gerichteten Öffnungen (24 bis 27) und/oder offenporigen Bauelementen (29 bis 32) und/oder mit Öffnungen (28) und/oder offenporigen Bauelementen (23) zwischen benachbarten Kanälen (20,23) vorgesehen sind.

5. Vorrichtung nach einem der vorangehenden Ansprüche,
dadurch gekennzeichnet,
daß der Stromkollektor (13) auf der Brennstoffseite fest mit der Nickelschicht (5) der Brennstoffelektrode (3) und der Stromkollektor (12) auf der Sauerstoffseite fest mit der Chromschicht (4) auf der Sauerstoffelektrode (2) verbunden ist und daß die peripheren Teile des Stromkollektors (12,13) seitlich herausgeführt und elektrisch leitend fest miteinander und/oder mit der Trennplatte (6) verbunden sind.

6. Vorrichtung nach einem der vorangehenden Ansprüche,
dadurch gekennzeichnet,
daß die gasdurchlässige Zwischenlage (11) aus einem metallischen oder keramischen filz- oder vliesartigen, hochelastischen, gasdurchlässigen Material als Strömungsverteiler für die gasförmigen Medien und/oder als ein die Wärmeleitung steuerndes Element wirkend ausgebildet ist.

7. Vorrichtung nach einem der vorangehenden Ansprüche,
dadurch gekennzeichnet,
daß als Feststoffelektrolyt (1) mit Y₂O₃-dotiertes Bi₂O₃ und/oder als Trennplatte (6) eine mit einer Al₂O₃-Oberflächenschutzschicht behaftete Fe-Legierung eingesetzt und/oder im Hohlraum der Trennplatte (6) auf der Brennstoffseite ein die endotherme Konvertierungsreaktion und das Wasser/Gas-Gleichgewicht beschleunigender Katalysator (18) verwendet wird.

## Claims

1. Apparatus for converting chemical energy of a fuel into electrical energy, comprising a plurality of high-temperature fuel cells stacked parallel to one another and having a solid electrolyte (1), an oxygen electrode (2), a fuel electrode (3), a separating plate (6) between adjacent fuel cells, the appratus further comprising current collectors (12, 13) between one separating plate (6) and the respectively opposite and adjacent electrode in order to form a live connection betweenn adjacent fuel cells, and further comprising elements for supplying and discharging the gaseous agents,
characterised in that
- the oxygen electrode (2) consists of SrO-doped Mn oxides with a Cr surface coating (4) and
- the fuel electrode (3) consists of Ni/ZrO₂ cermet with an Ni surface coating (5),
- the separating plate (6) is formed as a hollow body for guiding and distributing and for collecting gaseous agents, and
- a highly resilient component, acting as a high-temperature spring, in the form of a gas-permeable spacer (11) is provided between the separating plate (6) and the current collectors (12, 13).

2. Apparatus according to claim 1, characterised in that the planes of the plate-like fuel cells (1, 2, 3) are arranged vertically, each separating plate (6) being provided with channels (7) and apertures (8) for guiding, distributing and collecting the gaseous agents and/or in that in the fuel cell stack at least one external supply channel (14) for the fuel (symbol CH₄) standing vertically on the plate plane and at least one external supply channel (15) for the oxygen carrier (symbol O₂) standing parallel to the plate plane is provided.

3. Apparatus according to claim 1 or 2, characterised in that in order to supply the gaseous agents in the cold region of the apparatus, the separating plate (6) is provided with a projection (16) jutting over the contour of the fuel cell elements (1, 2, 3).

4. Apparatus according to one of the preceding claims, characterised in that for the flow-mechnically optimum supply of fuel (CH₄) and oxygen carrier (O₂) and for discharging the residual fuels of the reaction products and/or the residual oxygen and ballast materials with quasi-isothermic operation of the fuel cell (1, 2, 3) over its entire plate plane, the separating plate (6) is profiled and/or provided with a respective group of channels (19 to 23), wherein channels (19 to 23) are provided with corresponding apertures (24 to 27) aligned with the fuel cell elements (1 to 3) and/or open-pore components (29 to 32) and/or with apertures (28) and/or open pore components (23) between adjacent channels (20, 23).

5. Apparatus according to one of the preceding claims, characterised in that the current collector (13) is connected permanently to the nickel coating (5) of the fuel electrode (3) on the fuel side, and the current collector (12) is connected permanently to the chromium coating (4) on the oxygen electrode (2), and in that the peripheral parts of the current collector (12, 13) are guided out laterally and are connected permanently together and/or to the separating plate (6) in an electrically conductive manner.

6. Apparatus according to one of the preceding claims, characterised in that the gas-permeable spacer (11) is formed from a metal or ceramic felt-type or bonded fabric-type, highly resilient, gas-permeable material as a flow distributor for the gaseous agents and/or so as to act as an element which controls heat conduction.

7. Apparatus according to one of the preceding claims, characterised in that as a solid electrolyte (1), Bi₂O₃ doped with Y₂O₃ and/or as a separating plate (6) an Fe alloy comprising an Al₂O₃ surface-protective coating is used and/or in the cavity of the separating plate (6) on the fuel side, a catalyst (18) which accelerates the endothermic conversion reaction and the water/gas balance is used.

## Revendications

1. Dispositif pour la transformation d'énergie chimique d'un combustible en énergie électrique comportant une pluralité de cellules de combustible haute température disposées parallèlement côte à côte avec une électrolyte en matière solide (1), une électrode oxygène (2), une électrode de combustible (3), une plaque de séparation (6) entre des cellules de combustible avoisinantes, avec des collecteurs de courant (12, 13) entre une plaque de séparation (6) et l'électrode avoisinante respectivement opposée pour la liaison électroconductrice de cellules de combustible avoisinantes ainsi qu'avec des organes pour l'amenée et l'évacuation d'agents gazeux, caractérisé en ce que
- l'électrode oxygène (2) consiste en des oxydes Mn dotés SrO avec une couche superficielle Cr (4) et
- l'électrode de combustible (3) consiste en un Ni/ZrO₂-Cermet avec une couche superficielle Ni (5), en ce que
- la plaque de séparation (6) est conçue comme corps creux pour le guidage et la distribution ainsi que le recueil d'agents gazeux, et en ce que
- entre la plaque de séparation (6) et les collecteurs de courant (12, 13) est prévu un élément de construction fortement élastique, faisant office de ressort haute température sous forme d'une couche intermédiaire perméable au gaz (11).

2. Dispositif selon la revendication 1,
caractérisé en ce que
les plans des cellules de combustible en forme de plaques (1, 2, 3) sont disposés verticalement, chaque plaque de séparation (6) pour le guidage et la distribution et le recueil des agents gazeux étant munie de canaux (7) et d'ouvertures (8) et/ou en ce que dans l'empilage de cellules de combustible est prévu au moins un canal d'amenée (14) externe se situant perpendiculairement au plan des plaques pour le combustible (symbole CH₄) et au moins un canal d'amenée externe (15) se situant parallèlement au plan des plaques pour le support oxygène (symbole O₂).

3. Dispositif selon la revendication 1 ou 2,
caractérisé en ce que
pour l'amenée des agents gazeux dans la zone froide du dispositif, la plaque de séparation (6) est munie d'un appendice (16) faisant saillie au-dessus du profilé des éléments de cellules de combustible (1, 2, 3).

4. Dispositif selon l'une des revendications précédentes,
caractérisé en ce que
pour l'amenée optimale du point de vue de la mécanique des fluides du combustible (CH₄) et du support d'oxygène (O₂) et pour l'évacuation du combustible résiduel des produits réactionnels et/ou de l'oxygène résiduel ainsi que des matières de ballast en fonctionnement quasi-isothermique de la cellule de combustible (1, 2, 3) sur la totalité du plan de plaque, la plaque de séparation (6) est de conception profilée et/ou comporte chaque fois un groupe de canaux (19 à 23), les canaux (19 à 23) comportant des ouvertures correspondantes dirigées sur les éléments de cellules de combustible (1 à 3) ouvertures (24 à 27), et/ou des éléments de construction à pores ouverts (29 à 32) et/ou avec des ouvertures (28) et/ou des éléments de construction à pores ouverts (23) entre des canaux avoisinants (20, 23).

5. Dispositif selon l'une des revendications précédentes,
caractérisé en ce que
le collecteur de courant (13) est relié sur le côté combustible solidement à la couche nickel (5) de l'électrode de combustible (3) et le collecteur de courant (12) sur le côté oxygène solidement avec la couche chrome (4) sur l'électrode oxygène (2) et en ce que les parties périphériques du collecteur de courant (12, 13) sortent latéralement et sont raccordées solidement de façon électroconductrice entre elles et/ou avec la plaque de séparation (6).

6. Dispositif selon l'une des revendications précédentes,
caractérisé en ce que
la couche intermédiaire étanche au gaz (11) est réalisée en un matériau métallique ou céramique de type feutre ou nappe, fortement élastique, étanche au gaz sous forme de distributeur d'écoulement pour les agents gazeux et/ou sous forme d'élément de commande thermiquement conducteur.

7. Dispositif selon l'une des revendications précédentes,
caractérisé en ce qu'
en tant qu'électrolyte de matière solide (1) avec Bi₂O₃ doté Y₂O₃ et/ou en tant que plaque de séparation (6), on met en oeuvre un alliage Fe revêtu d'une couche de protection de surface d'Al₂O₃ et/ou dans la zone creuse de la plaque de séparation (6) sur le côté combustible, on utilise un catalyseur (18) accélérant la réaction de conversion endothermique et l'équilibre eau/gaz.
